# EUROPÄISCHE PATENTSCHRIFT

(11) **EP 2 703 232 B1**
(45) Veröffentlichungstag und Bekanntmachung des Hinweises auf die Patenterteilung: **05.10.2016**
(21) Anmeldenummer: 12181919.7
(22) Anmeldetag: 27.08.2012
(51) Int. Cl.: B60R 21/215, B60R 21/205, B29D 22/02

(54) **Verkleidungsbauteil mit Einlegeteil zur Abdeckung eines Airbags sowie Herstellungsverfahren für das Innenverkleidungsbauteil**
Cladding component with insert section for covering an airbag and method for producing the interior cladding component
Composant d'habillage avec pièce d'insertion destiné au recouvrement d'un airbag ainsi que procédé de fabrication du composant d'habillage intérieur

(43) Veröffentlichungstag der Anmeldung: 05.03.2014
(73) Patentinhaber: SMP Deutschland GmbH, 79268 Bötzingen (DE)
(72) Erfinder: Nogaret, Eric, 68600 Biesheim (FR); Lüsebrink, Uwe, 79100 Freiburg (DE)
(74) Vertreter: Westphal, Mussgnug & Partner Patentanwälte mbB

(56) Entgegenhaltungen:
- EP-A1- 0 743 229
- EP-B1- 2 178 723
- WO-A1-2010/063333
- DE-A1-102007 038 055
- DE-A1-102012 015 253
- DE-B3-102004 020 913

## Beschreibung

Die Erfindung betrifft ein Innenverkleidungsbauteil mit Einlegeteil zur Abdeckung eines Airbags mit den oberbegrifflichen Merkmalen des Patentanspruchs 1 sowie ein Herstellungsverfahren für das Innenverkleidungsbauteil mit den oberbegrifflichen Merkmalen des Patentanspruchs 12, wie beispielsweise aus EP 2 178 723 B1 bekannt.

Aus der EP 2 178 723 B1 ist ein Formteil mit integrierter Airbagabdeckung für eine Innenverkleidung eines Kraftfahrzeugs bekannt. Die Airbagabdeckung umfasst ein Airbagdeckelblech als Verstärkung und Splitterschutz. Das Airbagdeckelblech ist direkt beim Formgebungsprozess für das Formteil in die Airbagabdeckung eingeformt. Das Airbagdeckelblech kann aus einem verstärkten oder tiefgezogenen Kunststoff mit einer Geometrie zur Aufnahme der während des Formgebungsprozesses auftretenden Schrumpf- und Wärmespannungen bestehen.

Ferner ist aus der WO 2010/063333 A1 ein Innenverkleidungsbauteil mit einer Schusskanalabdeckung und einem Schusskanalmodul für einen Airbag bekannt. Das Schusskanalmodul und die Schusskanalabdeckung umfassen ein mit Kunststoff umspritztes Gewebe mit Scharnierfunkion. Eine Hubschlaufe ermöglicht ein Herausdrücken der Airbagabdeckung aus der ebene einer Instrumententafel durch den sich entfaltenden Airbag. Das Gewebe muss gemäß WO 2010/063333 A1 mittels einer Umlenkung verankert werden, um ein Herausreißen des Gewebes beim explosionsartigen Öffnen des Airbags zu verhindern.

Weiterer Stand der Technik ist in der EP 0743229 A1 beschirieben, die für ein Fahrzeuginsassenrückhaltesystem eine Gassackabdeckung mit einem Innenverkleidungsbauteil gemäss dem Oberbegriff des Anspruchs 1 offenbart. Die DE 10 2012 015 253 A1 beschreibt ein mehrschichtiges Verkleidungsteil, sowie ein Verfahren zur Herstellung eines mehrschichtigen Verkleidungsteils.

Klassische Gewebe haben kaum Formstabilität. Das beschränkt deren Einsatz als ein Einlegeteil in Umspritzverfahren. Marktgängige Kunststoffgewebe für Scharnierfunktion und Splitterschutzfunktion müssen mechanisch, beispielsweise an Platzhaltern in Spritzgussformen befestigt werden.

Bekannte Hubschlaufen, die beispielsweise der Dicke einer Dekorschicht entsprechen, müssen nach bekannten Verfahren beim Umspritzen materialfrei gehalten werden.

Der Erfindung liegt das Problem zugrunde, dass Airbagabdeckungen mit vor dem Hintergrund der Fahrgastsicherheit geeigneten Materialien einfacher gefertigt werden sollen.

Das Problem wird erfindungsgemäß gelöst durch ein Innenverkleidungsbauteil mit Einlegeteil zur Abdeckung eines Airbags umfassend die Merkmale des kennzeichnenden Teils des Anspruchs 1 sowie durch ein Herstellungsverfahren für ein solches Innenverkleidungsbauteil nach Anspruch 12.

Vorteilhafte Ausführungsformen sind in den jeweiligen Unteransprüchen angegeben.

Ein der Erfindung zugrundeliegendes Innenverkleidungsbauteil weist einen in einem Strukturbauteil ausgeführten Schusskanal und eine Abdeckung für einen Airbag auf, der in einer Schussrichtung aus dem Innenverkleidungsbauteil auszutreten bestimmt ist. Die Abdeckung ist zumindest abschnittsweise dem Airbag zugewandt mit einem Einlegeteil verstärkt. Erfindungsgemäß besteht das Einlegeteil zumindest teilweise aus einem thermoplastischen Kunststoff. Das Einlegeteil und das Strukturbauteil sind aus Kunststoffen derselben thermoplastischen Kunststofffamilie gefertigt.

Das Einlegeteil ist gemäß der Erfindung ein eigenstabiles Formteil, das mittels thermischer Umformung herstellbar ist. Das erfindungsgemäße Einlegeteil lässt sich automatisiert in ein Spritzgusswerkzeug einlegen und muss dort nicht mechanisch befestigt werden.

Strukturbauteil und Einlegeteil sind werkstoffkompatibel ausgeführt und erfüllen im Verbund die Funktionen zum regelgerechten Öffnen eines Airbags. Die Materialkompatibilität sichert die stoffschlüssige Verbindung von beispielsweise einem Gewebe im Einlegeteil und dem als Trägerteil anzusehenden Strukturbauteil. Die Funktionsintegration bringt Kostenvorteile. Gegenüber herkömmlichen Metallblechverstärkungen sind Gewichtsreduzierungen erreicht. Geringere Massenträgheiten stehen einem schnellen Auslösen des Airbags entgegen.

Die Vorteile einer Faserverstärkung im Hinblick auf einen erforderlichen Splitterschutz sind ausgenutzt, ohne dass aufwändige Konstruktionen für eine Verankerung eines Gewebes erforderlich wären. Der chemische Verbund hält das Einlegeteil sicher und vollständig an das Strukturbauteil gebunden, wenn sich der Airbag explosionsartig öffnet.

Erfindungsgemäße Innenverkleidungsbauteile können ein- oder mehrteilige Airbagabdeckungen umfassen und sind daher flexibel zur Abdeckung von Airbags in der Instrumententafel, der Seitenverkleidung und insbesondere in engen Bereichen um Säulen von Kraftfahrzeugen geeignet. Auch lässt sich das erfindungsgemäße Innenverkleidungsbauteil für alle gebräuchlichen Instrumententafelaufbauten einsetzen, beispielsweise genarbte, kaschierte und / oder verschäumte.

Einfache Geometrien des Einlegeteils gestatten das Einbringen definierter Scharnierlinien mittels das Einlegeteil passierenden Werkzeugschieberbewegungen während erfindungsgemäßer Spritzgussverfahren.

Gemäß einer vorteilhaften Ausführungsform des erfindungsgemäßen Innenverkleidungsbauteils ist der thermoplastische Kunststoff des Einlegeteils Polypropylen.

Mit diesem Kunststoff lassen sich Strukturbauteil und Einlegeteil in gewünschter Qualität kostengünstig fertigen.

Gemäß der erfindungsgemäßen Ausführungsform des erfindungsgemäßen Innenverkleidungsbauteils ist das Einlegeteil faserverstärkt, insbesondere mit einem Gewebe, Gelege und / oder Gewirke.

Die Faserverstärkung stabilisiert das Einlegeteil gegen Bruch.

Gemäß einer vorteilhaften Ausführungsform des erfindungsgemäßen Innenverkleidungsbauteils verstärken Fasern und / oder Endlosfasern zumindest teilweise den Kunststoff des Einlegeteils, beispielsweise Glas-, Aramid-, Polypropylen-, Jute- und / oder Kohlefasern.

Gemäß einer weiteren vorteilhaften Ausführungsform des erfindungsgemäßen Innenverkleidungsbauteils weist das Einlegeteil eine quer zu der Schussrichtung angeordnete Deckwand und entlang der Schussrichtung ausgerichtete Seitenwände auf. Besonders vorteilhaft ist eine Rückenwand scharnierartig mit der Deckwand verbunden. In Schussrichtung ausgerichtete Wände des Einlegeteils wirken im erfindungsgemäßen Verbund mit dem Strukturbauteil als Befestigungsabschnitt, der üblichen Kräften, die zur Delaminierung des Einlegeteils führen könnten, nicht ausgesetzt ist. Somit ist ein solches Einlegeteil sicher im Strukturbauteil, insbesondere im Schusskanal, eingebettet.

Gemäß der erfindungsgemäßen Ausführungsform des erfindungsgemäßen Innenverkleidungsbauteils weist das Einlegeteil zumindest eine Hubschlaufe auf. Besonders vorteilhaft ist die Hubschlaufe einem Austrittsende des Schusskanals zugewandt angeordnet.

Die Hubschlaufe definierter Länge wird erfindungsgemäß bereits beim Gewebeumformprozess in dem Einlegeteil gelegt und damit eine definierte Scharnierlinie unterstützt. Die Hubschlaufe erlaubt zunächst ein Heraustreten der Abdeckung in Schussrichtung, ohne dass die Abdeckung sich schon geöffnet hat.

Gemäß einer weiteren vorteilhaften Ausführungsform des erfindungsgemäßen Innenverkleidungsbauteils ist das Einlegeteil durch eine Umformung mit einem gleichmäßig dicken bzw. dichtem Fasergelege, -gewebe und / oder -gewirke verstärkt flächengebildet, insbesondere auch im Bereich der Hubschlaufe.

So funktioniert das Einlegeteil im Scharnier für beliebig dicke Dekore der Innenverkleidung.

Gemäß einer weiteren vorteilhaften Ausführungsform des erfindungsgemäßen Innenverkleidungsbauteils ist das Fasergelege, - gewebe und / oder -gewirke zur Ausbildung der Hubschlaufe zweifach umgelegt, sodass sich lokal drei Lagen parallel überlappen.

Gemäß einer weiteren vorteilhaften Ausführungsform des erfindungsgemäßen Innenverkleidungsbauteils ist zur Ausbildung einer U-Klappe oder einer H-Klappe eine Aufreißlinie parallel zu zumindest einem Scharnierelement, insbesondere mittig zwischen zwei Hubschlaufen, in das Einlegeteil eingebracht.

Gemäß einer weiteren vorteilhaften Ausführungsform des erfindungsgemäßen Innenverkleidungsbauteils ist die Aufreißlinie von der dem Airbag zugewandten Seite zumindest in das Einlegeteil eingelasert ist.

Eine solche Aufreißlinie gestattet das zeitgerechte Öffnen nach dem Heraustreten der Hubschlaufe und das sichere Öffnen ggf. an einer Stelle durch das Einlegeteil hindurch, ohne dass es zu Splitterungen kommt, die beispielsweise den Airbag verletzen könnten.

Gemäß der erfindungsgemäßen Ausführungsform des erfindungsgemäßen Innenverkleidungsbauteils ist das Einlegeteil zumindest abschnittsweise in den Schusskanal integriert, insbesondere mit zumindest einem Endabschnitt, beispielsweise der Rückenwand, parallel zu einer in Schussrichtung des Airbags ausgerichteten Wand des Schusskanals an dieser Wand anliegend.

Eine nach einem vorteilhaften erfindungsgemäßen Verfahren angespritzte Luftsackführung ist gemäß dieser vorteilhaften Ausführungsform des Innenverkleidungsbauteils lokal gewebeverstärkt und somit gegen einen Bruch gesichert.

Bei einem erfindungsgemäßen Herstellungsverfahren für ein Innenverkleidungsbauteil wird das Strukturbauteil gemeinsam mit dem Einlegeteil spritzgussgefertigt.

Das Einlegeteil lässt sich nach dem erfindungsgemäßen Herstellungsverfahren automatisiert in die Spritzgussform einbringen und positionieren.

Gemäß einer vorteilhaften Ausführungsform des erfindungsgemäßen Herstellungsverfahrens folgen zumindest die folgenden Verfahrensschritte aufeinander:
- Herstellen des Einlegeteils
- Vorformen des Einlegeteils, insbesondere mit Deckwand, Rückenwand, Seitenwänden und / oder zumindest einer Hubschlaufe,
- Einsetzen des Einlegeteils auf einen Platzhalter für den Airbag,
- Schließen der Gussform,
- Spritzgießen des Strukturbauteils, wobei der eingespritzte Kunststoff das Einlegeteil zumindest teilweise erreicht, insbesondere zumindest einseitig umfließt, sodass die gleichen Kunststoffe chemische Verbindungen eingehen können.

Ein durch den für das Einlegeteil verwendeten Thermoplasten gestattetes Umformen während des Vorformenerlaubt ein automatisiertes Einlegen des Einlegeteils in die Spritzgussform.

Gemäß einer weiteren vorteilhaften Ausführungsform des erfindungsgemäßen Herstellungsverfahrens wird dem Spritzgießen vorangehend, während des Spritzgießens und/oder nach dem Spritzgießen zumindest auf einer Seite des Platzhalters für den Airbag eine Leiste in den für das Strukturbauteil freigehaltenen Bereich eingefahren.

Einfache Geometrien des Einlegeteils gestatten das Einbringen definierter Scharnierlinien mittels das Einlegeteil passierenden Werkzeugschieberbewegungen während eines solchen Spritzgussverfahrens.

Gemäß einer vorteilhaften Ausführungsform des erfindungsgemäßen Herstellungsverfahrens wird dem Spritzgießen nachfolgend auf der Airbagseite des Innenverkleidungsbauteils eine Aufreißlinie in das Innenverkleidungsbauteil eingebracht, insbesondere in das Einlegeteil, besonders bevorzugt zur Ausbildung einer U-Klappe oder einer H-Klappe zumindest ein parallel zu einer Hubschlaufe und/oder mittig zwischen zwei Hubschlaufen angeordneter Laserschnitt von der dem Airbag zugewandten Seite.

Nachfolgend wird die Erfindung anhand von drei in Zeichnungen 30 dargestellten Ausführungsbeispielen näher erläutert.

Gleiche Teile haben gleiche Bezugszeichen erhalten. Um die Übersicht zu erhalten, sind nicht alle Bezugszeichen in allen Figuren eingetragen.

Es zeigen
- Fig. 1: eine schematisierte Darstellung eines Schnitts durch ein erstes Ausführungsbeispiel eines erfindungsgemäßen Innenverkleidungsbauteils mit einem Einlegeteil mit einer Hubschlaufe (U-Klappe) und hinterschäumter Haut,
- Fig. 2: eine schematisierte Darstellung eines Schnitts durch ein zweites Ausführungsbeispiel eines erfindungsgemäßen Innenverkleidungsbauteils mit einem Einlegeteil mit zwei Hubschlaufen (H-Klappe),
- Fig. 3: eine vergrößerte Darstellung des Schnitts gemäß Figur 1 oder 2 um die Hubschlaufe,
- Fig. 4: eine perspektivische Darstellung auf ein erfindungsgemäßes Innenverkleidungsbauteil von unten zur Verdeutlichung der Positionierung des Einlegeteils, mit oberhalb eines Strukturbauteils separat dargestelltem Einlegeteil,
- Fig. 5: das perspektivisch dargestellte Strukturbauteil aus Fig. 4 mit eingesetztem Einlegeteil,
- Fig. 6: eine perspektivische Darstellung auf das Strukturbauteil gemäß Figur 5 von oben, wobei das Einlegeteil verdeckt ist,
- Fig. 7: eine schematisierte Darstellung eines Schnitts durch das erste Ausführungsbeispiel gemäß Figur 1 mit geöffneter U-Klappe und ausgetretenem Airbag und
- Fig. 8: eine schematisierte Darstellung eines Schnitts durch ein drittes Ausführungsbeispiel eines erfindungsgemäßen, hier kaschierten Innenverkleidungsbauteils ohne Schaum mit einem Einlegeteil mit einer Hubschlaufe (U-Klappe).

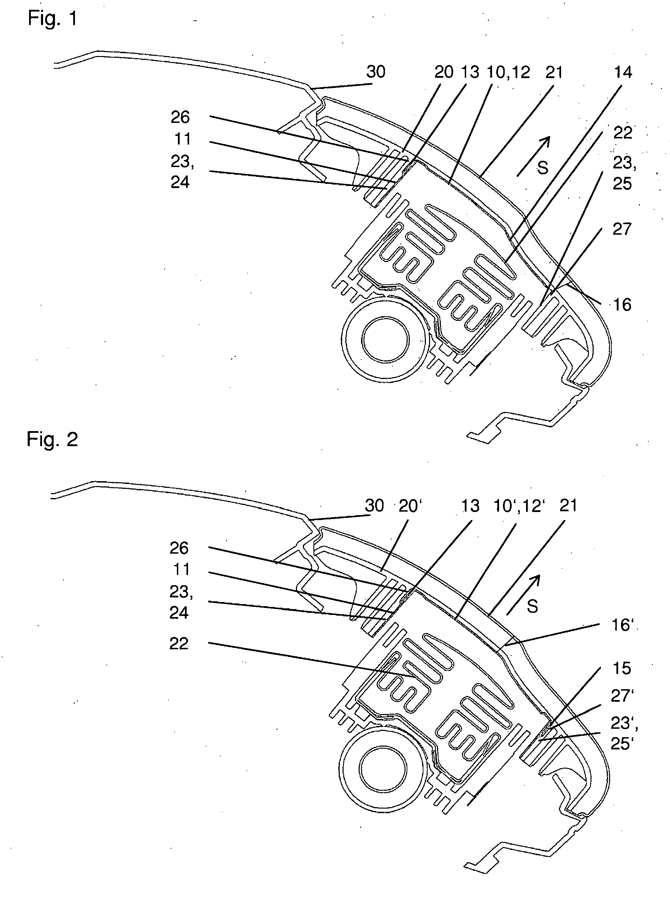

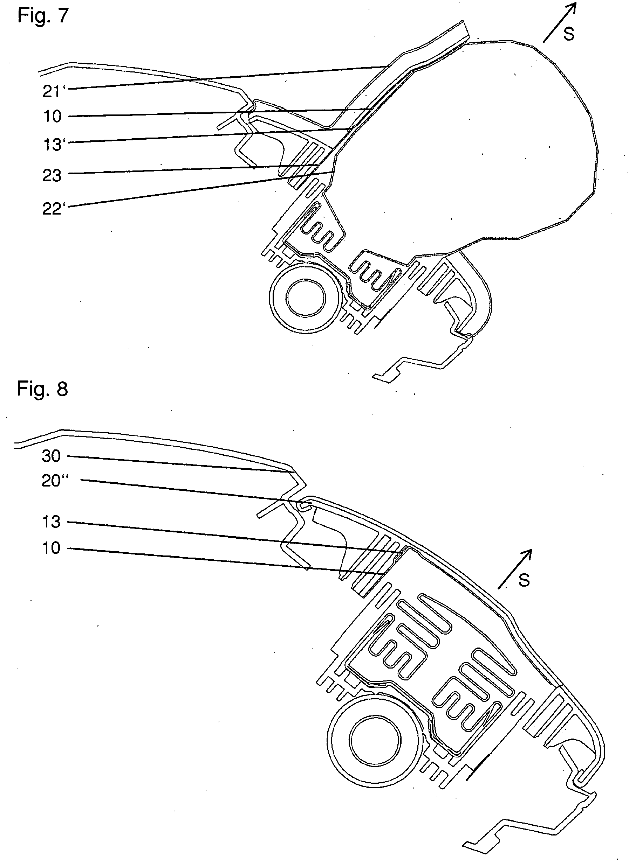

In den Figuren 1 und 3 bis 7 ist ein erfindungsgemäßes Innenverkleidungsbauteil gemäß einem ersten Ausführungsbeispiel dargestellt. Es handelt sich um eine Innenverkleidung 30 mit einer relativ dicken Abdeckung 21 für einen Airbag 22 in einem Kraftfahrzeug mit einer hinterschäumten sogenannten Slush-Haut. Der Airbag kann in einer Schussrichtung S austreten, wobei der durch eine geöffnete Abdeckung 21' ausgetretene Airbag 22' in Figur 7 dargestellt ist. Zunächst (Fig. 1 und 3 bis 6 ist der Airbag 22 jedoch unterhalb der als sogenannte U-Klappe ausgebildeten Abdeckung 21 zusammengelegt. Der Airbag 22 ist zum Fahrzeuginnenraum hin mittels eines Strukturbauteils 20 abgedeckt, welches dem Airbag 22 zugewandt mit einem Einlegeteil 10 verstärkt ist.

Der Airbag 22 gelangt nach einer Auslösung explosionsartig durch einen Schusskanal 23 ins Fahrzeuginnere. Das Strukturbauteil 20 weist deswegen entlang der Schussrichtung S ausgerichtete Wände 24, 25 mit Austrittsenden 26, 27 auf.

Das Einlegeteil 10 weist unter anderem mit einer Wölbung 14 eine der Außenkontur des Strukturbauteils 20 angepasste Deckwand 12 auf, die im Wesentlichen quer zur Schussrichtung S ausgebildet ist. An den Außenkanten der im Wesentlichen rechtwinkligen Deckwand 12 sind in Richtung Airbag 22 eine Rückenwand 11 und Seitenwände 17 grob rechtwinklig abgewinkelt, sodass sie entgegen der Schussrichtung S ausgerichtet sind.

Das Einlegeteil 10 ist an einem ersten der Austrittsenden 26 mit zumindest seiner Rückenwand 11 überlappend mit dem Strukturbauteil 20 verbunden, wobei erfindungsgemäß wegen Materialkompatibilität ein Stoffschluss gewährleistet ist.

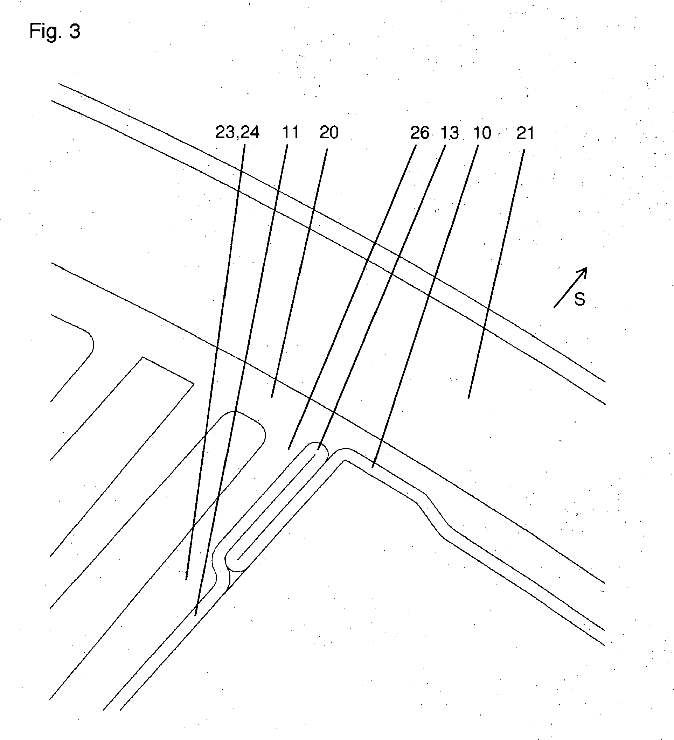

Das Einlegeteil 10 weist einseitig des Schusskanals 23 (links in Fig. 1) eine dessen Austrittsende 26 zugewandte Hubschlaufe 13 auf, in der ein Gewebe zweimal umgelegt ist, um ein Heraustreten der U-Klappe zu gewährleisten, bevor sie sich öffnet. Dieser zeitliche Ablauf wird durch Materialdicken und Aufreißlinien 16 im Strukturbauteil 20 sichergestellt, die aufeinander abgestimmt sind. So ist die Dicke des Strukturbauteils oberhalb der Hubschlaufe verringert (Fig. 3).

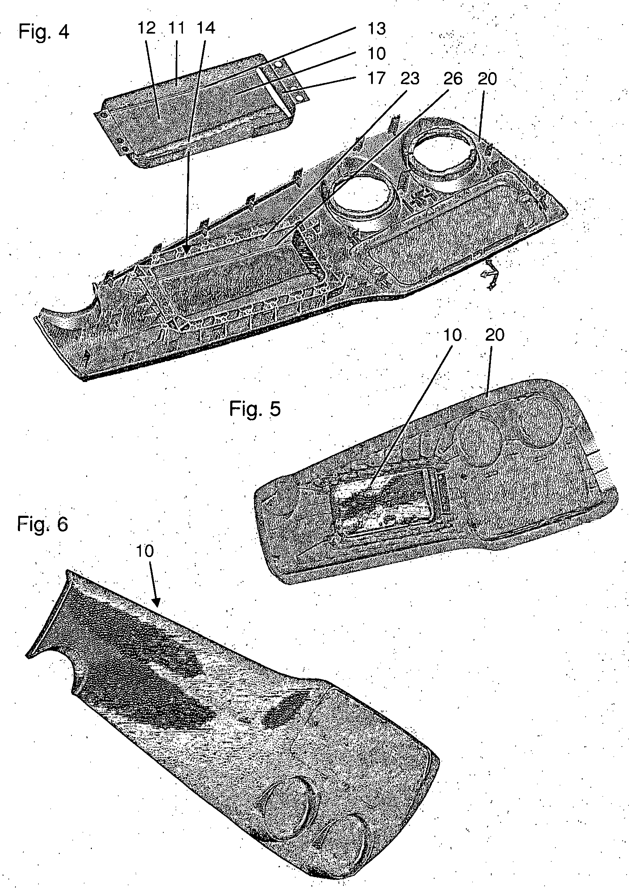

Zwar verdeutlichen insbesondere die Figuren 4 und 5 ein Einlegen des Einlegeteils in das Strukturbauteil 20. Tatsächlich wird nach einem erfindungsgemäßen Herstellungsverfahren aber das Einlegeteil 10 nach einem Umformprozess auf einen Platzhalter (nicht dargestellt) für den Airbag 22 gelegt und danach das Strukturbauteil 20 um das Einlegeteil 10 zumindest einseitig herum vergossen. Die Aufreißlinie 16 wird abschließend von innen in das Strukturbauteil 20 gelasert, ggf. auch durch das Einlegeteil 10 hindurch.

Ein zweites Ausführungsbeispiel eines erfindungsgemäßen Innenverkleidungsbauteils ist in Figur 2 dargestellt. Vorab bereits genannte Bezugszeichen im Wesentlichen ähnlicher Teile sind mit einem ' versehen. Im zweiten Ausführungsbeispiel ist eine H-Klappe ausgebildet. Beidseits des Schusskanals 23' weist das Einlegeteil 10' eine erste 13 und eine zweite Hubschlaufe 15 auf. Etwa mittig zwischen den Hubschlaufen verläuft der Schussrichtung S folgend die Aufreißlinie 16'. Im Fall des Auslösens des Airbags 22 öffnen sich vorliegend zwei Klappen, nachdem die Hubschlaufen 13 und 15 herausgetreten sind und das Einlegeteil 10' und das Strukturbauteil 20' entlang der Aufreißlinie 16' gerissen sind.

Ein drittes Ausführungsbeispiel eines erfindungsgemäßen Innenverkleidungsbauteils ist in Figur 8 dargestellt. Die Innenverkleidung ist vorliegend ohne Schäumung kaschiert. Das Öffnen dieses entsprechend dünnen Strukturbauteils 22" als Abdeckung für den Airbag ist nach dem Prinzip der U-Klappe analog zu den Figuren 1 und 3 bis 7 vorgesehen.

### Bezugszeichenliste

- 10, 10': Einlegeteil
- 11: Rückenwand
- 12, 12': Deckwand
- 13: erste Hubschlaufe
- 14: Wölbung
- 15: zweite Hubschlaufe
- 16, 16': Aufreißlinie
- 17: Seitenwand

- 20, 20', 20": Strukturbauteil
- 21, 21': Abdeckung
- 22, 22': Airbag
- 23, 23': Schusskanal
- 24: erste Wand
- 25, 25': zweite Wand
- 26: erstes Austrittsende
- 27, 27': zweites Austrittsende

- 30: Innenverkleidung

- S: Schussrichtung

## Patentansprüche

1. Innenverkleidungsbauteil mit einem in einem Strukturbauteil (20, 20', 20") ausgeführten Schusskanal (23, 23') und einer Abdeckung (21, 21') für einen Airbag (22), der in einer Schussrichtung (S) aus dem Innenverkleidungsbauteil auszutreten bestimmt ist, wobei die Abdeckung (21, 21') zumindest abschnittsweise dem Airbag (22) zugewandt mit einem Einlegeteil (10, 10') verstärkt ist, wobei
das Einlegeteil (10, 10') zumindest teilweise aus einem thermoplastischen Kunststoff besteht und das Einlegeteil (10, 10') und das Strukturbauteil (20, 20', 20'') aus Kunststoffen derselben thermoplastischen Kunststofffamilie gefertigt sind,
**dadurch gekennzeichnet, dass** das Einlegeteil (10, 10') faserverstärkt ist und zumindest abschnittsweise parallel zu einer in Schussrichtung (S) des Airbags ausgerichteten Wand (24, 25, 25') des Schusskanals (23, 23'), an dieser Wand (24, 25, 25') anliegend, in den Schusskanal (23, 23') integriert ist, wobei das Einlegeteil (10, 10') zumindest eine Hubschlaufe (13, 15) aufweist.

2. Innenverkleidungsbauteil nach Anspruch 1,
**dadurch gekennzeichnet, dass** der thermoplastische Kunststoff des Einlegeteils (10, 10') Polypropylen ist.

3. Innenverkleidungsbauteil nach Anspruch 1,
**dadurch gekennzeichnet, dass** das Einlegeteil (10, 10') mit einem Gewebe, Gelege und / oder Gewirke faserverstärkt ist.

4. Innenverkleidungsbauteil nach Anspruch 2,
**dadurch gekennzeichnet, dass** Fasern und / oder Endlosfasern zumindest teilweise den Kunststoff des Einlegeteils (10, 10') verstärken, beispielsweise Glas-, Aramid-, Polypropylen-, Jute- und/ oder Kohlefasern.

5. Innenverkleidungsbauteil nach einem der vorangehenden Ansprüche,
**dadurch gekennzeichnet, dass** das Einlegeteil (10, 10') eine quer zu der Schussrichtung (S) angeordnete Deckwand (12, 12') und entlang der Schussrichtung (S) ausgerichtete Seitenwände (17) aufweist, insbesondere eine Rückenwand (11), die scharnierartig mit der Deckwand (12, 12') verbunden ist.

6. Innenverkleidungsbauteil nach einem der vorangehenden Ansprüche,
**dadurch gekennzeichnet, dass** die Hubschlaufe (13, 15) einem Austrittsende (26, 27, 27') des Schusskanals (26, 27, 27') zugewandt ist.

7. Innenverkleidungsbauteil nach einem der vorangehenden Ansprüche, insbesondere nach Anspruch 6,
**dadurch gekennzeichnet, dass** das Einlegeteil (10, 10') durch eine Umformung mit einem gleichmäßig dicken bzw. dichtem Fasergelege, -gewebe und / oder -gewirke verstärkt flächengebildet ist, insbesondere auch im Bereich der Hubschlaufe (13, 15).

8. Innenverkleidungsbauteil nach einem der Ansprüche 6 oder 7,
**dadurch gekennzeichnet, dass** das Fasergelege, -gewebe und / oder -gewirke zur Ausbildung der Hubschlaufe (13, 15) zweifach umgelegt ist, sodass sich lokal drei Lagen parallel überlappen.

9. Innenverkleidungsteil nach einem der vorangehenden Ansprüche,
**dadurch gekennzeichnet, dass** zur Ausbildung einer U-Klappe oder einer H-Klappe eine Aufreißlinie (16) parallel zu zumindest einem Scharnierelement, insbesondere mittig zwischen zwei Hubschlaufen (13, 14), in das Einlegeteil (10') eingebracht ist.

10. Innenverkleidungsbauteil nach Anspruch 9,
**dadurch gekennzeichnet, dass** die Aufreißlinie (16) von der dem Airbag (22) zugewandten Seite zumindest in das Einlegeteil (10, 10') eingelasert ist.

11. Innenverkleidungsbäuteil nach einem der vorangehenden Ansprüche,
**dadurch gekennzeichnet, dass** das Einlegeteil (10, 10') mit zumindest einem Endabschnitt, beispielsweise der Rückenwand (11), in den Schusskanal (23, 23') integriert ist.

12. Herstellungsverfahren für ein Innenverkleidungsbauteil nach einem der vorangehenden Ansprüche,
**dadurch gekennzeichnet, dass** das Strukturbauteil (20, 20', 20") gemeinsam mit dem Einlegeteil (10) spritzgussgefertigt wird.

13. Herstellungsverfahren nach Anspruch 12,
**dadurch gekennzeichnet, dass** zumindest die folgenden Verfahrensschritte aufeinander folgen:
- Herstellen des Einlegeteils (10, 10')
- Vorformen des Einlegeteils (10, 10'), insbesondere mit Deckwand (12, 12'), Rückenwand (11), Seitenwänden (17) und / oder zumindest einer Hubschlaufe (13, 15),
- Einsetzen des Einlegeteils (10, 10') auf einen Platzhalter für den Airbag, Schließen der Gussform,
- Spritzgießen des Strukturbauteils (20, 20', 20"), wobei der eingespritzte Kunststoff das Einlegeteil (10, 10') zumindest teilweise erreicht, insbesondere zumindest einseitig umfließt, sodass die gleichen Kunststoffe chemische Verbindungen eingehen können.

14. Herstellungsverfahren nach Anspruch 13,
**dadurch gekennzeichnet, dass** dem Spritzgießen vorangehend, während des Spritzgießens und/oder nach dem Spritzgießen zumindest auf einer Seite des Platzhalters für den Airbag eine Leiste in den für das Strukturbauteil (20, 20', 20") freigehaltenen Bereich eingefahren wird.

15. Herstellungsverfahren nach einem der Ansprüche 12 bis 14,
**dadurch gekennzeichnet, dass** dem Spritzgießen nachfolgend auf der Airbagseite des Innenverkleidungsbauteils eine Aufreißlinie (16) in das Innenverkleidungsbauteil eingebracht wird, insbesondere in das Einlegeteil (10, 10'), besonders bevorzugt zur Ausbildung einer U-Klappe oder einer H-Klappe zumindest ein parallel zu einer Hubschlaufe (13, 14) und/oder mittig zwischen zwei Hubschlaufen (13, 14) angeordneter Laserschnitt von der dem Airbag (22) zugewandten Seite.

## Claims

1. Interior trim component having a shot channel (23, 23') implemented in a structural component (20, 20', 20") and a cover (21, 21') for an airbag (22) which is established to discharge in a shot direction (S) from the interior trim component, wherein the cover (21, 21') is reinforced at least in sections with an insert part (10, 10') facing towards the airbag (22), wherein
the insert part (10, 10') consists at least partially of a thermoplastic plastic and the insert part (10, 10') and the structural component (20, 20', 20") are produced from plastics of the same thermoplastic plastic family,
**characterised in that** the insert part (10, 10') is fibre-reinforced and is integrated into the shot channel (23, 23') to be in parallel at least in sections to a wall (24, 25, 25') of the shot channel (23, 23') aligned in the shot direction (S) of the airbag, and to abut onto this wall (24, 25, 25'), wherein the insert part (10, 10') has at least one lifting loop (13, 15).

2. Interior trim component according to claim 1,
**characterised in that** the thermoplastic plastic of the insert part (10, 10') is polypropylene.

3. Interior trim component according to claim 1,
**characterised in that** the insert part (10, 10') is fibre-reinforced with a woven, non-woven and/or knitted fabric.

4. Interior trim component according to claim 2,
**characterised in that** fibres and/or continuous fibres at least partially reinforce the plastic of the insert part (10, 10'), for example glass, aramid, polypropylene, jute and/or carbon fibres.

5. Interior trim component according to one of the preceding claims,
**characterised in that** the insert part (10, 10') has a cover wall (12, 12') arranged transversely to the shot direction (S) and side walls (17) aligned along the shot direction (S), in particular a back wall (11) which is connected in a hinged manner to the cover wall (12, 12').

6. Interior trim component according to one of the preceding claims,
**characterised in that** the lifting loop (13, 15) is facing towards an output end (26, 27, 27') of the shot channel (26, 27, 27').

7. Interior trim component according to one of the preceding claims, in particular claim 6,
**characterised in that** the insert part (10, 10') is fabricated to be reinforced by forming with an evenly thick or dense, fibrous woven, non-woven and/or knitted fabric, in particular also in the region of the lifting loop (13, 15).

8. Interior trim component according to one of claims 6 or 7,
**characterised in that** the fibrous woven, non-woven and/or knitted fabric is folded over twice for the formation of the lifting loop (13, 15), such that three positions overlap in parallel locally.

9. Interior trim component according to one of the preceding claims,
**characterised in that** a tear line (16) is introduced into the insert part (10') in parallel to at least one hinge element, in particular centrally between two lifting loops (13, 14) to form a U-flap or an H-flap.

10. Interior trim component according to claim 9,
**characterised in that** the tear line (16) is lasered at least into the insert part (10, 10') from the side facing towards the airbag (22).

11. Interior trim component according to one of the preceding claims,
**characterised in that** the insert part (10, 10') is integrated into the shot channel (23, 23') with at least one end section, for example the back wall (11).

12. Production method for an interior trim component according to one of the preceding claims,
**characterised in that** the structural component (20, 20', 20'') is injection moulded together with the insert part (10).

13. Production method according to claim 12,
**characterised in that** at least the following method steps follow one after the other:
- producing the insert part (10, 10')
- pre-forming the insert part (10, 10'), in particular with a cover wall (12, 12'), a back wall (11), side walls (17) and/or at least one lifting loop (13, 15),
- inserting the insert part (10, 10') onto a place holder for the airbag, closing the casting mould,
- injection moulding the structural component (20, 20', 20''), wherein the injected plastic at least partially reaches the insert Dart (10, 10'), in particular flows around at least on one side, such that the same plastics can form chemical compounds.

14. Production method according to claim 13,
**characterised in that**, prior to the injection moulding, during the injection moulding and/or after the injection moulding, a strip is introduced into the region kept free for the structural component (20, 20', 20") at least on one side of the place holder for the airbag.

15. Production method according to one of claims 12 to 14,
**characterised in that**, after the injection moulding, a tear line (16) is introduced into the interior trim component on the airbag side of the interior trim component, in particular into the insert part (10, 10'), particularly preferably at least one laser cut arranged in parallel to a lifting loop (13, 14) and/or centrally between two lifting loops (13, 14) from the side facing towards the airbag (22), to form a U-flap or an H-flap.

## Revendications

1. Composant d'habillage intérieur comportant un canal d'éjection (23, 23') réalisé dans un composant de structure (20, 20', 20") et un élément de couverture (21, 21') pour un coussin gonflable (22) (airbag) destiné à être éjecté du composant d'habillage intérieur dans la direction d'éjection (S),
* l'élément de couverture (21, 21') dont au moins des segments sont tournés vers le coussin gonflable (22) ayant un insert (10, 10'),
- l'insert (10, 10') étant au moins en partie en une matière thermoplastique et l'insert (10, 10') et le composant de structure (20, 20', 20") étant fabriqué en des matières synthétiques de la même famille des matières thermoplastiques,
**caractérisé en ce que**
l'insert (10, 10') est renforcé avec des fibres et il est intégré au moins par segments parallèlement à une paroi (24, 25, 25') du canal d'éjection (23, 23') orienté dans la direction d'éjection (S) du coussin gonflable, en s'appuyant contre cette paroi (24, 25, 25'), l'insert (10, 10') ayant au moins une boucle de soulèvement (13, 15).

2. Composant d'habillage intérieur selon la revendication 1,
**caractérisé en ce que**
la matière thermoplastique de l'insert (10, 10') est du polypropylène.

3. Composant d'habillage intérieur selon la revendication 1,
**caractérisé en ce que**
l'insert (10, 10') est renforcé par un tissus, une nappe et/ou un tricot.

4. Composant d'habillage intérieur selon la revendication 2,
**caractérisé en ce que**
les fibres et/ou des fibres sans fin renforcent au moins en partie la matière plastique de l'insert (10, 10'), par exemple des fibres de verre, des fibres aramides, de polypropylène, de jute et/ou des fibres de carbone.

5. Composant d'habillage intérieur selon l'une des revendications précédentes,
**caractérisé en ce que**
l'insert (10, 10') a une paroi de couverture (12, 12') disposée transversalement à la direction d'éjection (S) et des parois latérales (17) orientées le long de la direction d'éjection (S), notamment une paroi arrière (11), reliée à la manière d'une charnière à la paroi de couverture (12, 12').

6. Composant d'habillage intérieur selon l'une des revendications précédentes,
**caractérisé en ce que**
la boucle de soulèvement (13, 15) est tournée vers l'extrémité de sortie (26, 27, 27') du canal d'éjection (26, 27, 27').

7. Composant d'habillage intérieur selon l'une des revendications précédentes, notamment la revendication 6,
**caractérisé en ce que**
l'insert (10, 10') est formé renforcé en surface par une transformation avec une couche, un tissu ou un tricot de même épaisseur ou de fibres, denses, notamment également dans la zone de la boucle de soulèvement (13, 15).

8. Composant d'habillage intérieur selon l'une des revendications 6 ou 7,
**caractérisé en ce que**
la nappe, le tissus et/ou le tricot de fibres est replié deux fois pour former la boucle de soulèvement (13, 15) si bien que localement trois couches parallèles se chevauchent.

9. Composant d'habillage intérieur selon l'une des revendications précédentes,
**caractérisé en ce qu'**
on a une ligne de rupture (16) parallèle à au moins un élément de charnière, notamment au milieu entre deux boucles de soulèvement (13, 14) intégrées dans l'insert (10') réalise un volet en U ou un volet en H.

10. Composant d'habillage intérieur selon la revendication 9,
**caractérisé en ce que**
la ligne de rupture (16) est réalisée au moins dans l'insert (10, 10'), dans son côté tourné vers le coussin gonflable (22).

11. Composant d'habillage intérieur selon l'une des revendications précédentes,
**caractérisé en ce que**
l'insert (10, 10') comporte au moins un segment d'extrémité, par exemple la paroi arrière (11) qui est intégrée dans le canal d'éjection (23, 23').

12. Procédé de fabrication d'un composant d'habillage intérieur selon l'une des revendications précédentes,
**caractérisé en ce que**
le composant de structure (20, 20', 20") est fabriqué en commun avec l'insert (10) par injection.

13. Procédé de fabrication selon la revendication 12,
**caractérisé en ce qu'**il comprend :
au moins les étapes de procédé ci-après suivantes :
- fabrication de l'insert (10, 10'),
- préformage de l'insert (10, 10'), notamment avec une paroi de couverture (12, 12'), une paroi arrière (11), les parois latérales (17) et/ou au moins une boucle de soulèvement (13, 15),
- mise en place de l'insert (10, 10') sur un support de maintien du coussin gonflable, fermeture du moule d'injection,
- injection du composant de structure (20, 20', 20"), la matière plastique injectée arrivant au moins partiellement sur l'insert (10, 10'), notamment venant au moins sur un côté de façon que les mêmes matières plastiques soient reliées chimiquement.

14. Procédé de fabrication selon la revendication 13,
**caractérisé en ce qu'**
avant l'injection, pendant l'injection et/ou après l'injection, sur au moins un côté du support du coussin gonflable on introduit un longeron dans la zone maintenue libre pour le composant de structure (20, 20', 20").

15. Procédé de fabrication selon l'une des revendications 12 à 14,
**caractérisé en ce qu'**
après l'injection, on réalise sur le côté tourné vers le coussin gonflable du composant d'habillage intérieur, une ligne de rupture (16) dans le composant d'habillage intérieur, notamment dans l'insert (10, 10'), d'une manière particulièrement préférentielle pour réaliser un volet en U ou un volet en H, au moins parallèlement à une boucle de soulèvement (13, 14) et/ou au milieu entre deux boucles de soulèvement (13, 14) par une découpe au laser du côté tourné vers le coussin gonflable (22).
